# EUROPÄISCHE PATENTSCHRIFT

(11) **EP 2 011 635 B1**
(45) Veröffentlichungstag und Bekanntmachung des Hinweises auf die Patenterteilung: **22.09.2010**
(21) Anmeldenummer: 08158858.4
(22) Anmeldetag: 24.06.2008
(51) Int. Cl.: B29D 30/00, B65G 21/12, B29C 31/00

(54) **Abführeinrichtung für Fertigungsanlage**
Removal device for production facilities
Dispositif d'éloignement pour installation de fabrication

(30) Priorität: 04.07.2007 DE 102007031095
(43) Veröffentlichungstag der Anmeldung: 07.01.2009
(73) Patentinhaber: Goodyear Dunlop Tires Germany GmbH, 63450 Hanau (DE)
(72) Erfinder: Henze, Wolfgang, 15517 Fürstenwalde (DE)
(74) Vertreter: Kutsch, Bernd

(56) Entgegenhaltungen:
- GB-A- 1 148 958
- JP-A- 4 322 979
- JP-A- 62 157 119
- US-A- 3 222 715
- US-A- 5 395 150
- US-A1- 2005 040 015

## Beschreibung

Die Erfindung betrifft eine Einrichtung, über welche Fertigerzeugnisse oder Halbzeuge nach ihrer Bearbeitung in einem Automaten, einer Maschine oder einer vergleichbaren Fertigungsanlage von einer Bearbeitungsstation der betreffenden Fertigungsanlage für den Abtransport oder ihre anderweite Verbringung abführbar sind. Sie bezieht sich insbesondere auf eine Einrichtung zur Abführung von einem Heizer oder einer Heizpresse freigegebener Erzeugnisse oder Halbzeuge. Vorzugsweise ist die erfindungsgemäße Einrichtung zum Abführen von Reifen von einer die Reifen freigebenden Heizpresse vorgesehen. Ohne jedoch auf diese Verwendung beschränkt zu sein, sollen daher nachfolgend die insoweit bei der Herstellung von Reifen und deren Bearbeitung in einer entsprechenden Arbeitsstation in der Praxis üblichen Gegebenheiten und bestehenden Probleme erläutert werden.

Fahrzeugreifen werden bei ihrer Herstellung in einem der letzten Bearbeitungsschritte in einer Heizpresse einer formgebenden thermischen Behandlung unterzogen. Hierbei wird mittels einer in die Heizpresse eingelegten Form in bereits vorgeformte Reifenrohlinge das für den jeweiligen Reifen, das heißt insbesondere dessen Lauffläche, vorgesehene Profil in dem Elastomer erzeugt. Nach Beendigung des Heizprozesses und der damit verbundenen thermischen Formgebung öffnet sich das die jeweilige Form aufnehmende Gehäuse der Heizpresse und der mit dem Profil versehene Reifen wird von einem Auswerfer aus der Form beziehungsweise der Heizstelle herausgeschoben. Hiernach wird der Reifen im Allgemeinen zur Abkühlung abgelegt, danach von der Heizpresse abgeführt und vorzugsweise einem zentralen Förderband zugeführt (siehe US 3,222,715). Je nach Reifenmodell können sich aber auch dem thermischen Formgebungsprozess zunächst eine Nachbehandlung in einem so genannten Nachverstrecker und erst dann die Abkühlung sowie die Abführung des Reifens anschließen. Die entsprechenden Fertigungsanlagen beziehungsweise Heizpressen sind zur thermischen Behandlung unterschiedlicher Reifentypen einsetzbar. Für einen Wechsel auf einen anderen Reifentyp ist dabei von einer die Fertigungsanlage bedienenden Person, das heißt von einem Anlagenfahrer beziehungsweise einem Anlagenfahrer, lediglich die von einem Gehäuse aufgenommene Form zu wechseln. Allerdings handelt es sich bei den Heizpressen um verhältnismäßig komplexe Anlagen, deren die jeweilige Form aufnehmendes Gehäuse nicht ohne weiteres zugänglich ist. Dies ist zum einen durch arbeitsschutztechnische Maßnahmen bedingt, zum anderen aber auch dadurch, dass der Formenwechsel an einer bezüglich des Standplatzes der Anlage erhöhten Position vorzunehmen ist. Zum Formenwechsel muss der Formenbauer Befestigungsschrauben in dem die Form aufnehmenden Gehäuse lösen, die Form herausnehmen, eine andere Form einlegen und diese schließlich durch Wiederfestziehen der entsprechenden Schraubverbindung in dem Gehäuse fixieren. Er muss zudem im Zuge des Formenwechsels Dampf- beziehungsweise Kondensatschläuche lösen und nach dem Austausch der Form wieder befestigen. Da dies jedoch je nach Größe der Form auch eine relativ schwere körperliche Arbeit ist und vor dem Hintergrund des Arbeitsschutzes, braucht der Formenbauer hierfür eine sichere Standfläche. Leider ist jedoch festzustellen, dass serienmäßige Anlagen aus der Sicht des Formenbauers diesbezüglich häufig nicht günstig gestaltet sind. Entsprechende Anlagen sind zudem im Allgemeinen nicht mit einer standardisierten Einrichtung zur Abführung der Reifen ausgeführt. Dies wird seitens der Hersteller damit begründet, dass die Platzverhältnisse und die fertigungstechnische Anbildung nachfolgender Einrichtungen für die Weiterführung beziehungsweise weitere Abführung der Reifen bei den einzelnen Kunden sehr unterschiedlich gestaltet sind. Für die unmittelbare Abführung der Reifen aus der Heizpresse wird daher durch deren Hersteller keine Standardlösung angeboten.

Aufgabe der Erfindung ist es, eine Abführeinrichtung für in einer Fertigungsanlage bearbeitete Erzeugnisse oder Halbzeuge zu schaffen, welche den häufig sehr beschränkten Platzverhältnissen Rechnung trägt und dabei so gestaltet ist, dass trotz dieser eingeschränkten Platzverhältnisse eine sichere Standfläche für eine die Fertigungsanlage bedienende Person bereitgestellt werden kann.

Die Aufgabe wird durch eine Abführeinrichtung mit den Merkmalen des Hauptanspruchs gelöst. Vorteilhafte Aus- beziehungsweise Weiterbildungen der Erfindung sind durch die Unteransprüche gegeben.

Die erfindungsgemäße Abführeinrichtung besteht im Wesentlichen aus einer Arbeitsplattform und einer an dieser ausgebildeten Ablauffläche, wobei die Arbeitsplattform in einem aufgeständerten oder mindestens Teile einer Grube einfassenden äußeren Rahmen der Abführeinrichtung gehalten ist. Über die Ablauffläche der Arbeitsplattform sind Fertigerzeugnisse oder Halbzeuge nach ihrer Bearbeitung von einer Bearbeitungsstation der Fertigungsanlage zur Entnahme oder Übergabe an einen Transportbehälter oder eine Transporteinrichtung oder zur Verbringung an eine andere Bearbeitungsstation der Fertigungsanlage abführbar. Das Abführen der betreffenden Fertigerzeugnisse oder Halbzeuge erfolgt durch deren Bewegung über die Ablauffläche, wobei die entsprechende Bewegung durch die Schwerkraft der Teile, ein Auswurfmittel der sie freigebenden Bearbeitungsstation oder durch die Muskelkraft einer die Fertigungsanlage bedienenden Person bewirkt und durch an der Arbeitsplattform angeordnete Fördermittel unterstützt wird. Erfindungsgemäß ist die Arbeitsplattform innerhalb des sie haltenden äußeren Rahmens bezüglich einer horizontalen Achse um 180° zwischen zwei Arbeitslagen drehbar, wobei sie dabei ihre Position nicht verändert. In den beiden Arbeitslagen ist sie zudem arretierbar. Dabei ist in der ersten Arbeitslage die Ablauffläche und in der zweiten Arbeitslage eine der Ablauffläche gegenüberliegende Fläche der Arbeitsplattform nach oben gewandt. Von der in der zweiten Arbeitslage nach oben gewandten Fläche wird erfindungsgemäß eine sichere Standfläche für eine Handhabungs- und/oder Bedienvorgänge an der Fertigungsanlage durchführende Person ausgebildet. Eine erfindungswesentliche Überlegung der vorgeschlagenen Lösung ist es also, einer in vielen Fällen ohnehin erforderlichen und Platz beanspruchenden Abführeinrichtung in letztlich platzsparender Weise zwei Funktionen zuzuweisen, nämlich ihre eigentliche Funktion als Abführeinrichtung zum Abführen von an einer Arbeitsstation bearbeiteten Gegenständen oder Materialien nach der Beendigung des jeweiligen Bearbeitungsschrittes und die Funktion einer Standfläche für eine die Anlage bedienende Person beziehungsweise einen Anlagenfahrer. Da die Erfordernisse für die beiden genannten Funktionen sehr unterschiedlich beziehungsweise im Grunde teilweise sogar gegensätzlich sind, ist hierfür die Arbeitsplattform der Abführeinrichtung mit zwei unterschiedlichen, einander gegenüberliegenden Flächen ausgestaltet, wobei durch eine 180°-Drehung der Arbeitsplattform die jeweils benötigte Arbeitsfläche in eine nach oben gewandte Lage gebracht wird. Dabei wird der Überlegung Rechnung getragen, dass einerseits die Platzverhältnisse an entsprechenden Fertigungsanlagen, wie bereits angesprochen, häufig sehr begrenzt sind und dass andererseits eine Ablauffläche für Fertigerzeugnisse oder Halbzeuge so gestaltet sein sollte, dass deren Bewegung über die Ablauffläche durch geeignete, noch zu erläuternde Mittel unterstützt wird, während derartige Mittel einem sicheren Stand einer Bedienperson abträglich sind. Unter Beachtung dessen wird durch die erfindungsgemäße Einrichtung für die Bedienperson eine gegenüber der Ablauffläche anders ausgebildete, sichere Standfläche ohne zusätzlichen Platzbedarf zur Verfügung gestellt wird.

Bei den schon angesprochenen, an der Abführeinrichtung angeordneten Fördermitteln zur Unterstützung der Bewegung der sich über die Ablauffläche bewegenden Teile handelt es sich gemäß möglicher Ausbildungsformen um Kugeln, Rollen oder Walzen, deren Laufflächen aus der Ebene der Ablauffläche herausragen oder die von einem inneren Rahmen der Abführeinrichtung eingefasste Ablauffläche ausbilden. Denkbar sind aber auch Kugeln oder Rollen, welche an Begrenzungen der Ablauffläche gelagert sind, die von einem inneren Rahmen der Abführeinrichtung aufragen. Vorzugsweise ist die Ablauffläche als eine so genannte Rollenbahn ausgebildet. Bei bekannten Rollenbahnen ist an der Ablauffläche oder die Ablauffläche ausbildend eine Mehrzahl vorzugsweise kugelgelagerter Rollen oder Walzen angeordnet, über welche die über die Ablauffläche ablaufenden Teile in einer translatorischen Bewegung abrollen. Gegebenenfalls können die Rollen oder Walzen, soweit erforderlich, zudem auch noch motorisch unterstützt bewegt werden. Die von der jeweiligen Arbeitsstation der Fertigungsanlage freigegebenen Fertigerzeugnisse oder Halbzeuge werden dabei beispielsweise von einem Auswerfer der Arbeitsstation oder durch menschliche Muskelkraft in eine dann von den Rollen oder Walzen unterstützte Bewegung versetzt.

Gegebenenfalls kann die Bewegung der Objekte aber auch durch deren Schwerkraft initiiert werden, nämlich insbesondere dann, wenn die Ablauffläche zumindest eine geringe Neigung aufweist. Entsprechend einer vorgesehenen Weiterbildung der Erfindung ist daher die Arbeitsplattform so gestaltet, dass in ihrer ersten Arbeitslage, mit der nach oben gewandten Ablauffläche, eine veränderliche Neigung gegenüber der Horizontalen eingestellt werden kann. Hierzu ist gemäß einer möglichen Ausbildungsform an dem äußeren Rahmen der Abführeinrichtung ein sich am Boden abstützendes, pneumatisches oder hydraulisches Kolben-Zylinder-Aggregat angelenkt. Mittels dieses Kolben-Zylinder-Aggregats ist die Arbeitsplattform, je nach sonstiger Gestaltung beziehungsweise Ausbildung der Einrichtung, an ihrem der Arbeitsstation der Fertigungsanlage, von welcher die Gegenstände abzuführen sind, abgewandten Ende absenkbar oder, gemäß einer alternativen Möglichkeit, an ihrem der Fertigungsanlage zugewandten Ende anhebbar. Es entsteht somit eine geneigte Ebene, über welche die jeweiligen Gegenstände durch die schon erwähnten Räder, Rollen oder Walzen unterstützt, ablaufen können.

Je nach den sich anschließenden weiteren Prozessen können die betreffenden Fertigerzeugnisse oder Halbzeuge am Ende der Ablauffläche entnommen werden oder aber einem Transportbehälter beziehungsweise einer Transporteinrichtung zugeführt werden. Bei letztgenannter Transporteinrichtung kann es sich dabei beispielsweise auch um ein zentrales Förderband oder eine zentrale Rollenbahn handeln, auf welcher die Erzeugnisse oder Halbzeuge von mehreren Fertigungsanlagen zur anderweiten Verbringung zusammengeführt werden. Denkbar ist es aber auch, dass die jeweiligen Erzeugnisse oder Halbzeuge über die erfindungsgemäße Abführeinrichtung lediglich einer weiteren Bearbeitungsstation der mit ihr zusammenwirkenden Fertigungsanlage zugeführt werden.

Die letztgenannte Ausbildungsform mit der bezüglich der Waagerechten neigbaren Ablauffläche und einem hierfür vorgesehenen Kolben-Zylinder-Aggregat ist vorteilhaft dadurch weitergebildet, dass das Kolben-Zylinder-Aggregat bei ausgefahrenem Kolben beziehungsweise etwa waagerecht stehender Arbeitsplattform durch ein elektrisch betätigtes Sicherungselement gesichert ist, welches den Kolben im stromlosen Zustand im Falle eines möglichen Druckabfalls gegen ein Absinken innerhalb des Zylinders blockiert. Die der Ablauffläche gegenüberliegende Standfläche kann beispielsweise in der Form eines Gitterrostes ausgebildet sein. Die Arbeitsplattform ist zudem gegen in beiden Arbeitslagen gegen ein ungewolltes Wechseln in ihre jeweils andere Arbeitsstellung arretiert. Bei einer dafür eingerichteten Ausbildungsform sind an den Innenseiten eines die Arbeitsplattform einfassenden Rahmens mittels elektrisch arbeitender Zugmagnete betätigte Sicherungsbolzen angeordnet, welche zur Arretierung der Arbeitsplattform in an deren Außenflächen oder einen sie einfassenden inneren Rahmen angeordnete Ausnehmungen eingreifen.

Die Erfindung soll nachfolgend anhand eines Ausführungsbeispiels nochmals näher erläutert werden. In den zugehörigen Zeichnungen zeigen:
Fig. 1: zwei erfindungsgemäße Abführeinrichtungen in einer möglichen Ausbildungsform aus der Draufsicht
Fig. 2: die Abführeinrichtungen gemäß Fig. 1 aus der Richtung A betrachtet
Fig. 3: die Abführeinrichtungen gemäß Fig. 1 aus der Richtung B betrachtet.

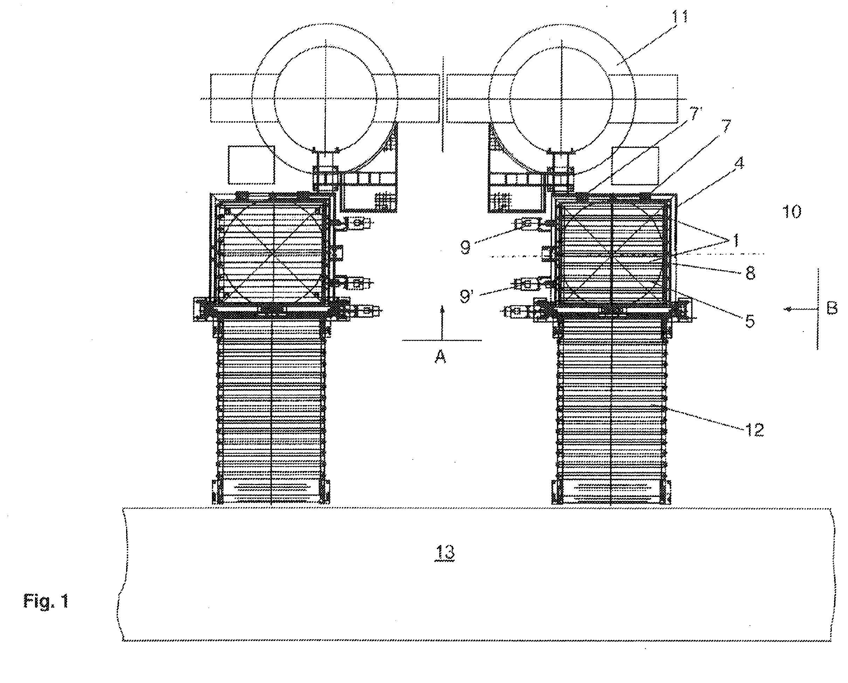

Die Fig. 1 zeigt zwei erfindungsgemäße Abführeinrichtungen in einer möglichen Ausgestaltungsform aus der Draufsicht. In dem dargestellten Beispiel ist jede der Abführeinrichtungen einer Fertigungsanlage 11, hier einer Heizpresse zur Reifenherstellung zugeordnet, in welcher mittels einer Form in einem thermischen Prozess ein Profil in einen in die Form eingelegten Reifenrohling eingeprägt wird. Nach der Beendigung des formgebenden Prozesses wird der mit dem Profil versehene Reifen nach der Freigabe der Form aus dieser heraus geschoben oder mittels eines Auswerfers herausbewegt. Hierbei kommt der Reifen auf der vorerst in etwa waagerecht ausgerichteten Arbeitsplattform 1 zu liegen und kann hier zunächst für einige Zeit auskühlen. Dabei befindet sich die Arbeitsplattform 1 in der ersten Arbeitslage, bei welcher ihre Ablauffläche 2, das heißt die nach dem Abkühlen des Reifens dessen Ablaufen ermöglichende Fläche, nach oben gewandt ist. Die Arbeitsplattform 1 ist in einem äußeren, aufgeständerten Rahmen 4 der Vorrichtung gehalten, wobei die Aufständerung derart ist, dass der Rahmen auf seiner der Heizpresse 11 zugewandten Seite an erhöhter Stelle mit Konstruktionsteilen der Heizpresse 11 verbunden ist und seine gegenüberliegende Seite auf dem Kolben eines Kolben-Zylinder-Aggregats 6 ruht.

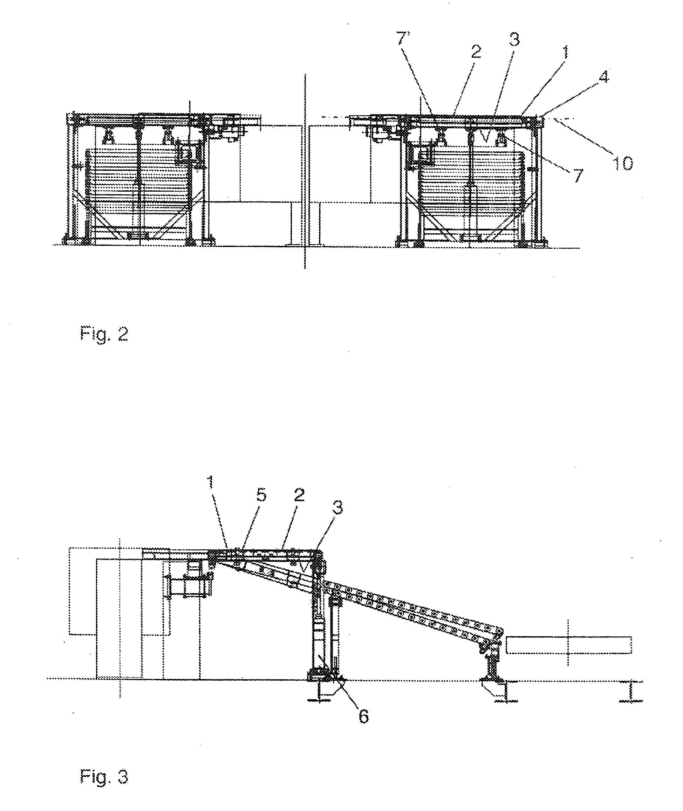

Nach dem Abkühlen des Reifens wird das der Heizpresse 11 abgewandte Ende der Arbeitsplattform 1 mittels des sich am Boden abstützenden und an dem äußeren, die Arbeitsplattform 1 aufnehmenden Rahmen 4 der Abführeinrichtung angelenkten Kolben-Zylinder-Aggregats 6 (siehe hierzu Fig. 2 und Fig. 3) abgesenkt und dabei die Arbeitsplattform 1 und mit ihr deren Ablauffläche 2 in eine gegenüber der Horizontalen geneigte Lage gebracht. Hierzu ist in dem dargestellten Ausführungsbeispiel der äußere Rahmen 4 über zwei Anlenkpunkte 7, 7' mit der Heizpresse 11 verbunden. Durch Schwenken um diese beiden Anlenkpunkte 7, 7' wird die Ablauffläche 2 in eine Lage gebracht, in welcher sie mit einer benachbart zu der Arbeitsplattform 1 angeordneten und sich stets in geneigter Lage befindenden Rollenbahn 12 eine durchgängige geneigte Ebene bildet. Da die Ablauffläche 2 der Arbeitsplattform 1 ebenfalls eine Rollenbahn ausbildet, kann ein auf der Arbeitsplattform 1 liegender Reifen durch Abrollen über die beiden Rollenbahnabschnitte 2, 12 der geneigten Ebene auf ein zentrales Förderband 13 ablaufen beziehungsweise abrollen.

Dem Grundgedanken der Erfindung folgend, ist die Arbeitsplattform 1 so ausgebildet, dass sie zur Bereitstellung sowohl einer Ablauffläche 2, als auch einer Standfläche 3 um eine horizontale Achse 10 herum um 180° gedreht werden kann. Bei dem dargestellten und hier erläuterten Ausführungsbeispiel ist die Bereitstellung einer Standfläche 3 beispielsweise erforderlich, um einem die Anlage bedienenden Formenbauer im Falle eines Wechsels des zu produzierenden Reifentyps einen hierzu erforderlichen Formenwechsel an der Heizpresse 11 zu ermöglichen. Dazu wird nach dem Ablaufen eines Reifens die Arbeitsplattform mittels des Kolben-Zylinder-Aggregats 6 zunächst wieder in die annähernd waagerechte Lage gebracht und dann die Arbeitsplattform 1 nach dem Lösen sie fixierender Verriegelungselemente 9, 9' um die schon erwähnte Achse 10 herumgedreht. Nach dieser 180°-Drehung ist die der Ablauffläche 2 gegenüberliegende Seite der Arbeitsplattform nach oben gewandt und bildet hier eine ebene und sichere Standfläche 3 für den Formenbauer aus. Die großzügige und stabile Standfläche 3 ermöglicht es dem Formenbauer aus einer sicheren Lage heraus den inneren, formgebenden Teil der beheizten Form durch einen anderen, zur Erzeugung eines anderen Profils dienenden Formteil zu ersetzen. Dabei ist die Arbeitsplattform 1 in der Lage mit der nach oben gewandten Standfläche 3 sicher fixiert, indem durch die Verriegelungselemente 9, 9' pneumatisch oder elektrisch betätigt Sicherungsbolzen, welche an der Innenseite des äußeren Rahmens 4 der Abführeinrichtung angeordnet sind, in Ausnehmungen des inneren Rahmens 8 beziehungsweise der Außenkanten der Arbeitsplattform 1 eingeschoben werden. Die Auslegung der Verriegelungselemente 9, 9' ist derart, dass die entsprechenden Sicherungsbolzen in der Ruhestellung, das heißt bei strombetätigten Verrieglungselementen 9, 9' im stromlosen Zustand, in die vorgenannten Ausnehmungen eingeführt sind. Auf diese Weise ist sichergestellt, dass bei einem Ausfall des Betätigungsmechanismus für die Verriegelungselemente 9, 9' die Arbeitsplattform 1 in ihrer gegenwärtigen Lage verharrt. Auch das die Arbeitsplattform 1 an ihrem der Heizpresse 11 abgewandten Ende abstützende und seine Neigung ermöglichende Kolben-Zylinder-Aggregat 6 ist in der zweiten Arbeitsstellung, bei welcher die Arbeitsplattform als Standfläche 3 für eine Bedienperson dient und der Kolben des Kolben-Zylinder-Aggregats 6 ausgefahren ist, gesichert. Hierzu wird der Kolben des Kolben-Zylinder-Aggregats 6 mittels eines als Elektromagnet ausgebildeten Zugmagneten im stromlosem Zustand in dem zugehörigen Kolben eingerastet beziehungsweise blockiert.

In der Fig. 2, welche die Abführeinrichtungen aus der Richtung A und ohne das davor befindliche Transportband 13 betrachtet zeigt, ist die aufgeständerte Arbeitsplattform 1 mit ihrer Ablauffläche 2 und ihrer dieser gegenüberliegenden Standfläche 3 zu erkennen, wobei sich die Arbeitsplattform 1 an der, der Fertigungsanlage 11, also der Heizpresse abgewandten Seite, auf dem Kolben des schon genannten, in der gezeigten Stellung mittels des Zugmagneten gesicherten Kolben-Zylinder-Aggregats 6 abstützt.

Die Fig. 3 zeigt die Anordnung gemäß der Fig. 1 nochmals in einer Seitenansicht aus der Richtung B. Hier ist zu erkennen, dass die Arbeitsplattform 1 mittels des Kolben-Zylinder-Aggregats 6 geneigt und dabei in eine sich an die Schräglage der benachbarten Rollbahn 12 angepasste Schräglage gebracht ist. Über die hierdurch gebildete geneigte Ebene läuft der zuvor abgekühlte Reifen auf das Transportband 13 ab.

### Liste der verwendeten Bezugszeichen

- 1: Arbeitsplattform
- 2: Ablauffläche
- 3: Standfläche
- 4: äußerer Rahmen
- 5: Fördermittel
- 6: Kolben-Zylinder-Aggregat
- 7, 7': Anlenkpunkt
- 8: innerer Rahmen
- 9, 9': Verriegelungselement
- 10: (horizontale) Achse
- 11: Fertigungsanlage, z.B. Heizpresse
- 12, 13: Transportmittel

## Patentansprüche

1. Abführeinrichtung für eine Fertigungsanlage (11), mit einer in einem aufgeständerten und/oder mindestens Teile einer Grube einfassenden äußeren Rahmen (4) gehaltenen Arbeitsplattform (1) und einer an dieser ausgebildeten Ablauffläche (2), über welche Fertigerzeugnisse oder Halbzeuge nach ihrer Bearbeitung von einer Bearbeitungsstation der Fertigungsanlage (11) zu ihrer Entnahme oder Übergabe an einen Transportbehälter oder eine Transporteinrichtung (12, 13) oder zur Verbringung an eine andere Bearbeitungsstation der Fertigungsanlage (11) abführbar sind, wobei ihre Bewegung über die Ablauffläche (2) durch ihre Schwerkraft, ein Auswurfmittel der sie freigebenden Bearbeitungsstation oder die Muskelkraft einer die Fertigungsanlage (11) bedienenden Person bewirkt und durch an der Arbeitsplattform (1) angeordnete Fördermittel (5) unterstützt wird, **dadurch gekennzeichnet, dass** die Arbeitsplattform (1) innerhalb des Rahmens (4) und unter Beibehaltung ihrer Position bezüglich einer horizontalen Achse (10) um 180° zwischen zwei Arbeitslagen drehbar und in beiden Arbeitslagen arretierbar ist, wobei in der ersten Arbeitslage die Ablauffläche (2) und in der zweiten Arbeitslage eine der Ablauffläche (2) gegenüberliegende Fläche nach oben gewandt ist und wobei von der, in der zweiten Arbeitslage nach oben gewandten Fläche eine sichere Standfläche (3) für eine Handhabungs- und/oder Bedienvorgänge an der Fertigungsanlage (11) ausführende Person ausgebildet ist.

2. Abführeinrichtung nach Anspruch 1, **dadurch gekennzeichnet, dass** es sich bei den Fördermitteln (5) um Kugeln, Rollen oder Walzen einer Rollenbahn handelt, deren Laufflächen aus der Ebene der Ablauffläche (2) herausragen oder die von einem inneren Rahmen (8) der Abführeinrichtung eingefasste Ablauffläche (2) ausbilden.

3. Abführeinrichtung nach Anspruch 2, **dadurch gekennzeichnet, dass** die die Fördermittel (5) ausbildenden Kugeln, Rollen oder Walzen kugelgelagert sind.

4. Abführeinrichtung nach Anspruch 1 oder 2, **dadurch gekennzeichnet, dass** die Fördermittel (5) zusätzlich motorisch getrieben werden.

5. Abführeinrichtung nach einem der Ansprüche 1 bis 4, **dadurch gekennzeichnet, dass** deren Arbeitsplattform (1) zumindest in der ersten Arbeitlage, in welcher die Ablauffläche (2) nach oben gewandt ist, gegen die Horizontale in eine das Ablaufen der Fertigerzeugnisse oder Halbzeuge unterstützende Lage neigbar ist, wobei die Ablauffläche (2) oder der äußere Rahmen (4) gemeinsam mit der Ablauffläche (2) um mindestens einen Anlenkpunkt (7, 7') derart verschwenkbar ist, dass entweder das der Arbeitstation abgewandte Ende der Ablauffläche (2) absenkbar oder ihr der Arbeitstation zugewandtes Ende anhebbar ist.

6. Abführeinrichtung nach Anspruch 5, wobei die Ablauffläche gemeinsam mit dem äußeren Rahmen (4) verschwenkbar ist, **dadurch gekennzeichnet, dass** zum Heben oder Senken des äußeren Rahmens an dem äußeren Rahmen der Kolben mindestens eines sich am Boden unterhalb der Arbeitsplattform abstützenden, hydraulisch arbeitenden Kolben-Zylinder-Aggregats (6) angelenkt ist.

7. Abführeinrichtung nach Anspruch 5 oder 6, wobei die Ablauffläche gemeinsam mit dem äußeren Rahmen (4) verschwenkbar ist, **dadurch gekennzeichnet, dass** zum Heben oder Senken des äußeren Rahmens an dem äußeren Rahmen (4) der Kolben mindestens eines sich am Boden unterhalb der Arbeitsplattform abstützenden, pneumatisch arbeitenden Kolben-Zylinder-Aggregats (6) angelenkt ist.

8. Abführeinrichtung nach Anspruch 6 oder 7, **dadurch gekennzeichnet, dass** das oder die Kolben-Zylinder-Aggregate (6) mit einem den Kolben in der ausgefahrenen Stellung fixierenden elektrischen Sicherungselement versehen sind, welches verhindert, dass der Kolben sich bei einem Abfallen des hydraulischen oder pneumatischen Drucks in den Zylinder zurück bewegt, indem es die Bewegung des Kolbens im Zylinder blockiert, wobei das Sicherungselement im stromlosen Zustand aktiv ist.

9. Abführeinrichtung nach einem der Ansprüche 1 bis 8, **dadurch gekennzeichnet, dass** zur Arretierung der Arbeitsplattform (1) an dem äußeren Rahmen (4) elektrisch betätigte Verriegelungselemente (9, 9') mit Sicherungsbolzen angeordnet sind, welche in den beiden Arbeitslagen der Arbeitsplattform (1) in am Außenumfang der Arbeitsplattform oder in dem sie einfassenden inneren Rahmen (8) ausgebildete Ausnehmungen eingreifen, wobei die Sicherungsbolzen der Verriegelungselemente (9, 9') im stromlosen Zustand in die Ausnehmungen eingeführt sind.

10. Abführeinrichtung nach einem der Ansprüche 1 bis 9, **dadurch gekennzeichnet, dass** die in der zweiten Arbeitslage der Arbeitsplattform (1) nach oben gewandte Standfläche (3) durch einen metallischen Gitterrost ausgebildet ist.

## Claims

1. Discharge apparatus for a production facility (11), comprising a work platform (1) held in an elevated frame (4) and/or an outer frame enclosing at least parts of a pit, and a run-off surface (2) formed on this platform, by which finished products or semifinished products after processing are dischargeable from a processing station of the production facility (11) for removal or transfer to a transport container or transport device (12, 13), or for transfer to another processing station of the production facility (11), wherein their movement over the run-off surface (2) is effected by an ejection means of the processing station releasing them or by the muscle power of a person operating the production facility (11), and assisted by conveying means (5) disposed at the work platform (1), **characterized in that** the work platform (1) is rotatable within the frame (4) while maintaining its position relative to a horizontal axis (10) by 180° between two operating positions, and is lockable in both operating positions, wherein in the first operating position the run-off surface (2) faces upward while in the second operating position a surface opposite the run-off surface (2) faces upward, and wherein a secure standing surface (3) is provided for a person performing manipulating and/or controlling operations at the production facility (11) from the surface facing upward in the second operating position.

2. Discharge apparatus according to Claim 1, **characterized in that** the conveying means involves balls, rolls, or rollers of a roll conveyor, the running surfaces of which project from the plane of the run-off surface (2), or that form the run-off surface (2) enclosed by an inner frame (8) of the discharge apparatus.

3. Discharge apparatus according to Claim 2, **characterized in that** the balls, rolls, or rollers forming the conveying means (5) are supported by ball bearings.

4. Discharge apparatus according to Claims 1 or 2, **characterized in that** the conveying means (5) is additionally motor-driven.

5. Discharge apparatus according to one of Claims 1 through 4, **characterized in that** the work platform (1) of the apparatus, at least in the first operating position in which the run-off surface (2) faces upward, is tiltable relative to the horizontal into a position assisting the downward run of the finished products or semifinished products, wherein the run-off surface (2) is pivotable about at least one link point (7, 7') such that either the end of the run-off surface (2) facing away from the work station is lowerable or the surface's end facing the work station is raisable.

6. Discharge apparatus according to Claim 5, wherein the run-off surface is jointly pivotable with the outer frame (4), **characterized in that** the piston of at least one piston-cylinder assembly (6) providing support on the floor below the work platform and hydraulically operated is linked to the outer frame to raise and lower the outer frame.

7. Discharge apparatus according to Claims 5 or 6, wherein the run-off surface is jointly pivotable with the outer frame (4), **characterized in that** the piston of at least one piston-cylinder assembly (6) providing support on the floor below the work platform and pneumatically operated is linked to the outer frame (4) to raise and lower the outer frame.

8. Discharge apparatus according to Claims 6 or 7, **characterized in that** the piston-cylinder assembly(ies) (6) are provided with an electrical locking element that secures the piston in the extended position, which locking element prevents the piston from moving back into the cylinder in response to a failure in the hydraulic or pneumatic pressure by blocking the motion of the piston in the cylinder, the locking element being enabled in the de-energized state.

9. Discharge apparatus according to one of Claims 1 through 8, **characterized in that** electrically actuated locking elements (9, 9') with locking bolts are disposed on the outer frame (4) to lock the work platform (1), which bolts in the two operating positions of the work platform (1) engage recesses formed in the outer perimeter of the work platform or in the inner frame (8) enclosing the platform, the locking bolts of the locking elements (9, 9') being inserted into the recesses when in the de-energized state.

10. Discharge apparatus according to one of Claims 1 through 9, **characterized in that** the standing surface (3) facing upward in the second operating position of the work platform (1) is formed by a metal grating.

## Revendications

1. Dispositif d'évacuation pour une installation de fabrication (11), comprenant une plate-forme de travail (1) maintenue dans un bâti externe (4) supporté et/ou bordant au moins des parties d'une fosse et une surface d'écoulement (2) réalisée contre ladite plate-forme, par dessus laquelle des produits finis ou des produits semi-finis, après leur traitement, peuvent être évacués depuis un poste de traitement de l'installation de fabrication (11) pour leur retrait ou leur transfert à un récipient de transport ou à un dispositif de transport (12, 13) ou encore à des fins d'acheminement à un autre poste de traitement de l'installation de fabrication (11), leur mouvement par-dessus la surface d'écoulement (2) étant mis en oeuvre par leur pesanteur, par un moyen d'éjection du poste de traitement qui les libère ou bien par la force musculaire d'une personne préposée à l'installation de fabrication (11) et étant soutenu par des moyens de transport disposés sur la plate-forme de travail, **caractérisé en ce que** la plate-forme de travail (1) peut effectuer des rotations, à l'intérieur du bâti (4) tout en maintenant sa position par rapport à un axe horizontal (10), de 180° entre deux positions de travail et peut être arrêtée dans les deux positions de travail, la surface d'écoulement (2), dans la première position de travail et, dans la deuxième position de travail, une surface opposée à la surface d'écoulement (2), étant orientée vers le haut, et la surface tournée vers le haut dans la deuxième position de travail procurant une surface d'appui fiable (3) pour des processus de manipulation et/ou de fonctionnement, pour la personne préposée à la gestion de l'installation de fabrication (11).

2. Dispositif d'évacuation selon la revendication 1, **caractérisé en ce que**, en ce qui concerne les moyens de transport (5), il s'agit de billes, de galets ou de rouleaux d'un transporteur à rouleaux dont les surfaces de roulement font saillie par rapport au plan de la surface d'écoulement (2) ou qui forment la surface d'écoulement (2) bordée par un bâti interne (8) du dispositif d'évacuation.

3. Dispositif d'évacuation selon la revendication 1, **caractérisé en ce que** les billes, les galets ou les rouleaux formant les moyens de transport (5) sont montés sur des roulements à bille.

4. Dispositif d'évacuation selon la revendication 1 ou 2, **caractérisé en ce que** les moyens de transport (5) sont en outre entraînés par un moteur.

5. Dispositif d'évacuation selon l'une quelconque des revendications 1 à 4, **caractérisé en ce que** sa plate-forme de travail (1), au moins dans la première position de travail dans laquelle la surface d'écoulement (2) est tournée vers le haut, peut s'incliner par rapport à l'horizontale pour prendre une position qui favorise l'écoulement des produits finis ou des produits semi-finis, la surface d'écoulement (2) ou le bâti externe (4) étant à même de pivoter conjointement avec la surface d'écoulement (2) autour d'au moins un point d'articulation (7, 7') de telle sorte que, soit l'extrémité de la surface d'écoulement (2) qui se détourne du poste de travail peut s'abaisser, soit son extrémité tournée vers le poste de travail peut se soulever.

6. Dispositif d'évacuation selon la revendication 5, dans lequel la surface d'écoulement peut pivoter de manière conjointe avec le bâti externe (4), **caractérisé en ce que**, pour le soulèvement ou l'abaissement du bâti externe, le piston d'au moins un agrégat du type piston-cylindre (6) à fonctionnement hydraulique, s'appuyant sur le sol en dessous de la plate-forme de travail, est articulé au bâti externe.

7. Dispositif d'évacuation selon la revendication 5, dans lequel la surface d'écoulement peut pivoter de manière conjointe avec le bâti externe (4), **caractérisé en ce que**, pour le soulèvement ou l'abaissement du bâti externe, le piston d'au moins un agrégat du type piston-cylindre (6) à fonctionnement pneumatique, s'appuyant sur le sol en dessous de la plate-forme de travail, est articulé au bâti externe (4).

8. Dispositif d'évacuation selon la revendication 6 ou 7, **caractérisé en ce que** l'agrégat ou les agrégats du type à piston-cylindre (6) sont munis d'un élément de sécurité électrique qui fixe le piston dans la position sortie, l'élément empêchant que le piston, en cas de chute de la pression hydraulique ou pneumatique, ne rentre dans le cylindre, en bloquant le mouvement du piston dans le cylindre, l'élément de sécurité étant actif en cas de coupure de courant.

9. Dispositif d'évacuation selon l'une quelconque des revendications 1 à 8, **caractérisé en ce que**, pour l'arrêt de la plate-forme de travail (1), des éléments de verrouillage (9, 9') à entraînement électrique, comprenant des boulons de fixation, sont disposés contre le bâti externe (4), les boulons venant s'engrener, dans les deux positions de travail de la plate-forme de travail (1), dans des évidements réalisés à la périphérie externe de la plate-forme de travail ou bien dans le bâti interne (8) qui les borde, les boulons de fixation des éléments de verrouillage (9, 9') venant s'insérer dans les évidements en cas de coupure de courant.

10. Dispositif d'évacuation selon l'une quelconque des revendications 1 à 9, **caractérisé en ce que** la surface (3) tournée vers le haut dans la deuxième position de travail de la plate-forme de travail (1) est réalisée à l'aide d'une grille métallique.
